# EUROPÄISCHE PATENTSCHRIFT

(11) **EP 2 574 229 B1**
(45) Veröffentlichungstag und Bekanntmachung des Hinweises auf die Patenterteilung: **31.12.2014**
(21) Anmeldenummer: 12180445.4
(22) Anmeldetag: 14.08.2012
(51) Int. Cl.: A01D 41/14, A01D 45/02

(54) **Selbstfahrende landwirtschaftliche Erntemaschine mit einem um eine vertikale Achse schwenkbaren Erntevorsatz**
Self-propelled agricultural harvesting machine with a harvesting attachment swivel-mounted on a vertical axis
Moissonneuse agricole automobile dotée d'un accessoire de récolte articulé autour d'un axe vertical

(30) Priorität: 27.09.2011 DE 102011083535
(43) Veröffentlichungstag der Anmeldung: 03.04.2013
(73) Patentinhaber: Deere & Company, Moline, IL 61265-8098 (US)
(72) Erfinder: Hahn, Klaus, 68199 Mannheim (DE); Peters, Ole, 25724 Neufeld (DE)
(74) Vertreter: Holst, Sönke

(56) Entgegenhaltungen:
- EP-A1- 1 611 781
- EP-A1- 1 808 063
- DE-A1-102005 004 212
- US-A- 4 329 833

## Beschreibung

Die Erfindung betrifft eine selbstfahrende landwirtschaftliche Erntemaschine mit einem Fahrgestell, das sich auf im Bodeneingriff befindlichen Mitteln abstützt, mit denen die Erntemaschine in einer normalen Vorwärtsfahrtrichtung über ein Feld bewegbar ist, einer Lenksteuereinrichtung, mit denen die im Bodeneingriff befindlichen Mittel lenkbar sind, einer innerhalb des Fahrgestells angeordneten Erntegutbearbeitungseinrichtung und einem an der Vorderseite des Fahrgestells angeordneten Einzugsförderer, dem ein gegenüber dem Fahrgestell um eine vertikale Achse schwenkbar gelagerter Erntevorsatz zur Aufnahme von Erntegut vorgeordnet ist, welches im Erntebetrieb durch den Einzugsförderer der Erntegutbearbeitungseinrichtung zuführbar ist.

### Stand der Technik

Viele Typen selbstfahrender landwirtschaftlicher Erntemaschinen umfassen ein Fahrgestell, das mit angetriebenen vorderen Rädern und lenkbaren hinteren Rädern ausgestattet ist. Beispiele sind Mähdrescher und Feldhäcksler. An der Vorderseite der Fahrgestelle der Erntemaschine ist ein Erntevorsatz zur Aufnahme von auf einem Feld liegenden oder stehenden Erntegut angebracht, der das Erntegut im Erntebetrieb an einen mit dem Fahrgestell verbundenen Einzugsförderer übergibt, welcher bei Mähdreschern als Schrägförderer und bei Feldhäckslern als Einzugsgehäuse bezeichnet wird. Der Einzugsförderer verbringt das Erntegut in das Innere des Fahrgestells, in dem Erntegutbearbeitungseinrichtungen, wie Dresch-, Trenn- und Reinigungseinrichtungen bei Mähdreschern und Häckselaggregate bei Feldhäckslern, angeordnet sind.

Die Erntevorsätze sind üblicherweise abnehmbar, aber ansonsten starr am Einzugsförderer angebracht. Zur Anpassung an die Bodenkontur ist der Einzugsförderer in der Regel gegenüber dem Fahrgestell der Erntemaschine mittels eines Aktors um eine horizontal und quer zur Vorwärtsrichtung verlaufende Achse schwenkbar befestigt. Eine geeignete Steuerung erfasst die Höhe des Erntevorsatzes über dem Boden mittels eines Sensors und steuert den Aktor derart an, dass eine gewünschte Höhe oder ein gewünschter Auflagedruck des Erntevorsatzes auf dem Boden erreicht wird. Diese Steuerung kann den Erntevorsatz zusätzlich gegenüber dem Einzugsförderer um eine sich horizontal und in Vorwärtsrichtung der Erntemaschine erstreckende Achse verschwenken (EP 1 269 823 A1), was beispielsweise bei Hangmähdreschern mit zur selbsttätigen horizontalen Ausrichtung des Fahrgestells mit höhenverstellbaren Rädern beim Befahren von Seitenhängen sinnvoll ist. Es wurde auch vorgeschlagen, den Erntevorsatz gegenüber dem Einzugsförderer selbsttätig um eine horizontal und quer zur Vorwärtsrichtung verlaufende Achse zu verschwenken (DE 295 19 842 U), um stets einen optimalen Schnittwinkel der Mähmesser gegenüber dem Erntegut zu erzielen. Gegenüber dem Einzugsförderer um horizontale Achsen schwenkbare Erntevorsätze sind somit bekannt.

Um den Radius des kurvenäußeren Endes des Erntevorsatzes zu vermindern und auf diese Weise die Erntemaschine beim Freischneiden des Vorgewendes an den Ecken eines Feldes leichter manövrieren zu können, bzw. die Halmteiler des Erntevorsatzes auch in Kurven quer zur Vorwärtsrichtung des Erntevorsatzes auszurichten, wurde vorgeschlagen, den gesamten Erntevorsatz gegenüber der Erntemaschine um die vertikale Achse schwenkbar anzulenken und abhängig vom Lenkwinkel der Erntemaschine anzusteuern (EP 1 808 063 A1 und EP 1 733 606 A1).

Derzeit besteht ein Bedarf an immer breiteren Erntevorsätzen. Die Breite nicht separat am Boden abgestützter Erntevorsätze ist jedoch durch die Tragfähigkeit der Erntemaschine bzw. des Erdbodens unter den Rädern oder Raupenlaufwerken der Erntemaschine begrenzt. Es sind zwar auch Erntemaschinen mit am Erntevorsatz angebrachten Rädern beschrieben worden (US 4 329 833 A1), jedoch ist zu befürchten, dass eine derartige Erntemaschine mit dem Erntevorsatz bei schwierigen Bodenverhältnissen, wie beispielsweise am Seitenhang oder bei durchweichten Böden, dennoch kaum voran zu bewegen sein wird, denn es werden nur die Räder der Erntemaschine angetrieben und die passiv gelenkten (nachlaufend aufgehängten) Räder des Erntevorsatzes können beispielsweise am Seitenhang nur wenig dazu beitragen, den Erntevorsatz auf seiner gewünschten Spur zu führen.

### Problem

Die der Erfindung zu Grunde liegende Aufgabe wird darin gesehen, eine selbstfahrende Erntemaschine mit einem gegenüber der Erntemaschine um die Hochachse schwenkbaren Erntevorsatz bereitzustellen, die auch bei schwierigen Bodenverhältnissen unproblematisch über ein Feld bewegt werden kann.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine selbstfahrende landwirtschaftliche Erntemaschine umfasst ein Fahrgestell, das sich auf im Bodeneingriff befindlichen Mitteln (z.B. Räder und/oder Raupenlaufwerke) abstützt, mit denen die Erntemaschine in einer normalen Vorwärtsfahrtrichtung über ein Feld bewegbar ist. Die Erntemaschine ist mit einer manuell oder selbsttätig arbeitenden, z.B. auf einer satellitenbasierten Positionserkennungseinrichtung und/oder den Bestand des Felds mechanisch oder optisch erfassenden Sensorik basierenden Lenksteuereinrichtung versehen, mit denen die im Bodeneingriff befindlichen Mittel lenkbar sind, wozu Räder um die Hochachse verstellt und Raupenlaufwerke mit unterschiedlichen Geschwindigkeiten angetrieben werden können. Innerhalb des Fahrgestells ist eine Erntegutbearbeitungseinrichtung angeordnet und an der Vorderseite des Fahrgestells befindet sich ein Einzugsförderer, dem ein gegenüber dem Fahrgestell um eine vertikale Achse schwenkbar gelagerter Erntevorsatz zur Aufnahme von Erntegut vorgeordnet ist. Das Erntegut wird im Erntebetrieb durch den Einzugsförderer der Erntegutbearbeitungseinrichtung zugeführt. Der Erntevorsatz stützt sich durch antreibbare und mittels eines fremdkraftbetätigten, mit der Lenksteuereinrichtung gekoppelten Aktors lenkbare Erntevorsatzbodeneingriffsmittel, bei denen es sich ebenfalls um Räder und/oder Raupenlaufwerke handeln kann, auf dem Boden ab.

Mit anderen Worten ist der Erntevorsatz mit lenkbaren und angetriebenen Erntevorsatzbodeneingriffsmitteln (in Form von Rädern und/oder Raupenlaufwerken) ausgestattet. Der Aktor zur Lenkung der Erntevorsatzbodeneingriffsmittel ist mit der Lenksteuereinrichtung der Erntemaschine verbunden, sodass die Erntevorsatzbodeneingriffsmittel manuell oder automatisch in einer gewünschten Weise gelenkt werden können, um den Erntevorsatz und die Erntemaschine auf einer gewünschten Bahn zu bewegen. Auf diese Weise wird der Erntevorsatz durch die Erntevorsatzbodeneingriffsmittel nicht nur abgestützt, sondern auch nach aktiv vorn bewegt und aktiv gelenkt. Dadurch werden die Traktion bei schwierigen Bodenverhältnissen verbessert und die Bodenverdichtung reduziert. Ein separater Aktor zur Verschwenkung des Erntevorsatzes gegenüber dem Fahrgestell der Erntemaschine erübrigt sich.

Bei einer bevorzugten Ausführungsform ist zwischen dem Erntevorsatz und dem Einzugsförderer noch ein langgestreckter Zwischenförderer angeordnet. Der Erntevorsatz wird gegenüber der Erntemaschine nach vorn versetzt, was den Vorteil bietet, dass der Erntevorsatz derart breit gestaltet werden kann, dass er sich in seitlicher Richtung über das äußere Ende eines Abgabeförderers der Erntemaschine hinaus erstrecken kann und ein Transportfahrzeug zur Übernahme des Ernteguts oder von Erntegutresten hinter dem Erntevorsatz innerhalb dessen seitlicher Umrisse herfahren kann. Auch muss der Abgabeförderer der Erntemaschine nicht mehr so lang gebaut werden, dass er sich seitlich über den Erntevorsatz hinaus erstreckt.

Der Erntevorsatz kann drei Segmente mit Mitteln zur Aufnahme des Ernteguts umfassen, an deren Rückseite Förderer angeordnet sind, die das aufgenommene Erntegut dem Zwischenförderer übergeben. Bei dem mittleren Segment zur Aufnahme des Ernteguts kann es sich um einen konventionellen, üblicherweise einzeln verwendeten Erntevorsatz handeln, beispielsweise um ein Schneidwerk mit einer Querförderschnecke oder Gurten zur Querförderung des Ernteguts. Dieser üblicherweise einzeln verwendete Erntevorsatz kann durch konventionelle Halterungen abnehmbar am Zwischenförderer angebracht werden.

Zum Transport des Erntevorsatzes auf einer Straße können die Segmente des Erntevorsatzes in eine eingefaltete Transportstellung verbracht werden, in welcher äußere Segmente aus ihrer Arbeitsstellung entgegen der Vorwärtsrichtung um die Hochachsen nach hinten verschwenkt sind und sich über dem Zwischenförderer befinden. Das mittlere Segment (oder die äußeren Segmente) des Erntevorsatzes können dann zusätzlich entgegen der Vorwärtsrichtung gegenüber den Erntevorsatzbodeneingriffsmitteln in eine Transportstellung verschoben werden. Der Erntevorsatz kann dann durch die Erntemaschine oder ein anderes Zugfahrzeug zum nächsten Einsatz oder zum Abstellen gezogen werden.

Vorzugsweise ist die Fördergeschwindigkeit des Zwischenförderers veränderbar und anhand eines Sensors zur vorausschauenden Erfassung der Menge des aufgenommenen Ernteguts im Sinne einer Vergleichmäßigung der Rate des der Erntegutbearbeitungseinrichtung zugeführten Ernteguts ansteuerbar. Hierzu sei auf die Offenbarung der DE 199 21 466 A1 verwiesen.

Die vertikale Achse, um die der Erntevorsatz gegenüber dem Fahrzeug schwenkbar ist, kann sich zwischen dem Zwischenförderer und dem Einzugsförderer oder zwischen dem Erntevorsatz und dem Zwischenförderer befinden. Es ist auch denkbar, zwei derartige Achsen vorzusehen, von denen sich eine zwischen dem Zwischenförderer und dem Einzugsförderer und die andere zwischen dem Erntevorsatz und dem Zwischenförderer befindet.

In der Regel erfolgt die Steuerung des Aktors für die Lenkung der Emtevorsatzbodeneingriffsmittel derart, dass diese gegensinnig zu den lenkbaren, im Bodeneingriff befindlichen Mitteln der Erntemaschine angesteuert werden. Dadurch bewegt sich der Erntevorsatz auf näherungsweise derselben Bahn wie die Erntemaschine, was zum Beispiel beim Wenden am Feldende zu einem verkleinerten Wenderadius führt. Beim Befahren eines Seitenhangs kann es jedoch sinnvoll sein, der Lenksteuereinrichtung Signale hinsichtlich einer Seitenhangneigung zuzuführen und den Aktor des Erntevorsatzes durch die Lenksteuereinrichtung abhängig von der Seitenhangneigung anzusteuern, damit der Erntevorsatz auf einer gewünschten Bahn bewegt wird, indem er durch die Erntevorsatzbodeneingriffsmittel hangaufwärts gezogen wird, um einen eventuellen Schlupf auszugleichen.

Die vorliegende Erfindung eignet sich für alle Arten selbstfahrender Erntemaschinen wie Mähdrescher, Feldhäcksler, Baumwollpflücker oder selbstfahrende Ballenpressen.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf eine selbstfahrende Erntemaschine mit einem Erntevorsatz und zwei Transportfahrzeugen,
- Fig. 2: die Erntemaschine aus Figur 1 beim Befahren einer Kurve,
- Fig. 3: die Erntemaschine aus Figur 1 beim Befahren eines Seitenhangs,
- Fig. 4: den Erntevorsatz aus Figur 1 in einer teilweise in die Transportposition verbrachten Stellung, und
- Fig. 5: den Erntevorsatz aus Figur 1 in einer komplett in die Transportposition verbrachten Stellung.

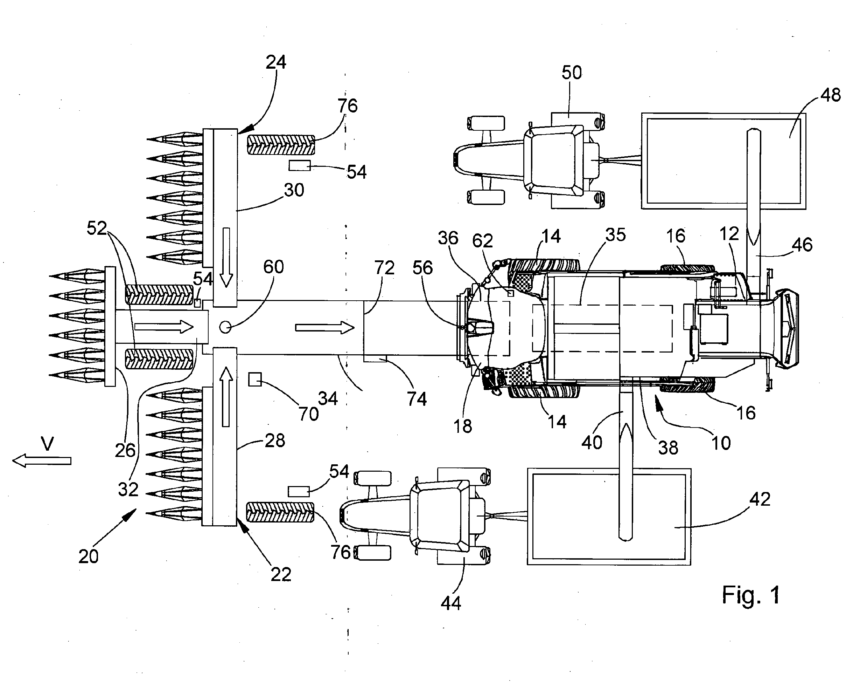

Eine in der Figur 1 gezeigte Erntemaschine 10 in der Form eines Mähdreschers umfasst ein Fahrgestell 12, das auf zwei vorderen angetriebenen, im Eingriff mit dem Erdboden befindlichen Mitteln 14 in Form von Rädern und zwei hinteren, lenkbaren, im Eingriff mit dem Erdboden stehenden Mitteln 16 in Form von Rädern getragen wird und eine Fahrerkabine 18 aufweist, von der aus die Erntemaschine 10 von einem Fahrer bedient werden kann. Bei der Ernte und beim Fahren auf einer Straße wird die Erntemaschine 10 in der durch die Blickrichtung des Fahrers in der Fahrerkabine 18 definierten, normalen Vorwärtsfahrtrichtung V voranbewegt. Sie kann aber vorübergehend, z. B. zum Wenden, auch rückwärts gefahren werden.

Ein Erntevorsatz 20 in Form eines aus drei Segmenten 22, 24 und 26 aufgebauten Maispflückers mit Pflückeinheiten wird verwendet, um Erntegut aufzunehmen und es über rückwärtige Förderer 28, 30, 32 einem langgestreckten Zwischenförderer 34 zuzuführen, der es wiederum einem als Schrägförderer ausgeführten Einzugsförderer 36 der Erntemaschine 10 zuführt. Das Erntegut wird vom Einzugsförderer 36 einer Erntegutbearbeitungseinrichtung 35 der Erntemaschine 10 zugeführt, die an sich bekannt ist und als Axial- oder Tangentialdreschwerk ausgeführt sein kann und das geerntete Gut drischt und trennt. Korn und Spreu fallen durch Roste am Boden der Erntegutbearbeitungseinrichtung 35 in ein Reinigungssystem, die Spreu entfernt und das saubere Korn einem Kornelevator zu, welcher das saubere Korn in einem Korntank 38 ablegt. Das saubere Korn im Korntank 38 kann durch einen Entladeförderer 40 in einen Anhänger 42 eines ersten Transportfahrzeugs 44 entladen werden. Gedroschenes, vom Korn befreites Stroh wird von der Erntegutbearbeitungseinrichtung 36 durch einen Auslasskanal 46 auf einen Anhänger 48 eines zweiten Transportfahrzeugs 50 ausgeworfen. Die antreibbaren Komponenten der Erntemaschine 10 werden durch einen Verbrennungsmotor angetrieben. Im Folgenden beziehen sich alle Richtungsangaben, wie vorn, hinten, oben und unten auf die normale Vorwärtsfahrtrichtung V.

Der Erntevorsatz 20 umfasst drei Segmente 22, 24 und 26. Ein linkes Segment 22 befindet sich an der linken Seite des langgestreckten Zwischenförderers 34 und ein rechtes Segment 24 befindet sich an der rechten Seite des langgestreckten Zwischenförderers 34. Die rückwärtigen Förderer 28 und 30 des linken und rechten Segments 22, 24 fördern das Erntegut quer zur Vorwärtsrichtung V zur Mitte des Erntevorsatzes 20, wo es durch den Zwischenförderer 34 übernommen und dem Einzugsförderer 36 zugeführt wird. Das mittlere Segment 26 des Erntevorsatzes 20 ist dem linken und rechten Segment 22, 24 vorgeordnet und sein Förderer 32 fördert das vom mittleren Segment 26 aufgenommene Erntegut nach hinten zum langgestreckten Zwischenförderer 34. Bei dem mittleren Segment 26 kann es sich um einen separaten, konventionell verfügbaren Erntevorsatz handeln. Da das mittlere Segment 26 sich seitlich mit den inneren Bereichen der Segmente 22 und 24 überdeckt, entsteht beim Kurvenfahren kein Erntegutverlust. Man könnte jedoch alternativ oder zusätzlich dazu das mittlere Segment 26 durch einen Aktor (nicht gezeigt) beim Kurvenfahren zur Kurvenmitte hin verschieben oder um die Hochachse drehen, um derartige Erntegutverluste zu vermeiden.

Die Förderer 28 bis 32 und 34 können als Gurtförderer ausgeführt sein und elektromotorisch oder hydraulisch angetrieben werden. Auch die angetriebenen Elemente der Segmente 22 bis 26 können durch Elektromotore oder Hydromotore angetrieben werden. Anstelle des gezeigten, zur Maisernte geeigneten Erntevorsatzes 20 könnte auch ein zur Getreideernte geeigneter, in sich starrer oder flexibler Erntevorsatz verwendet werden, der mit Haspeln, Schneidwerksbalken und Förderern 28 bis 32 in Form von Schnecken oder Fördergurten ausgestattet ist. Es wäre alternativ auch denkbar, den Erntevorsatz 20 mit Mähtrommeln auszustatten, die eine fehler- und verstopfungsarme Aufnahme des Ernteguts insbesondere für autonome, nicht mit einem Bediener besetzte Erntemaschinen ermöglichen. Auch kann der Erntevorsatz 20 zur Sonnenblumenernte ausgerüstet werden.

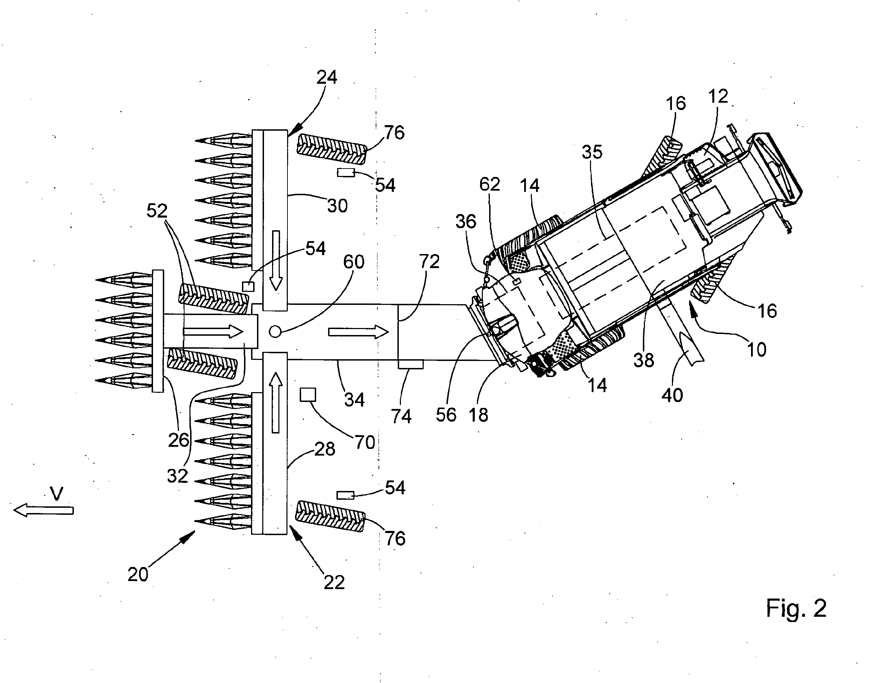

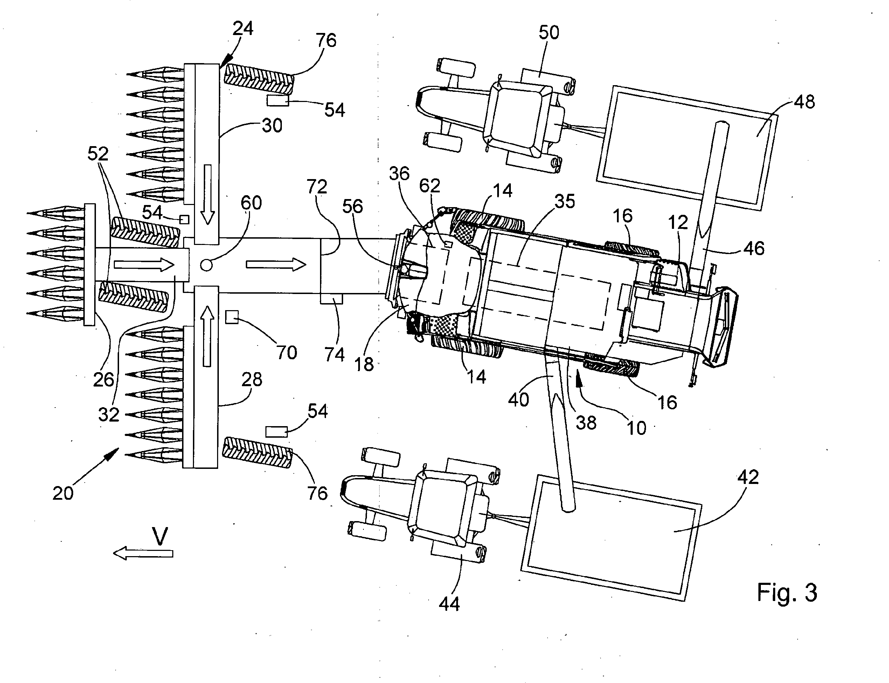

Der Erntevorsatz 20 ist mit Erntevorsatzbodeneingriffsmitteln 52 in Form von Rädern ausgestattet, die mittels Elektro- oder Hydromotoren antreibbar und mittels eines fremdkraftbetätigten Aktors 54 lenkbar sind, der als Hydraulikzylinder oder Elektromotor ausgeführt sein kann. Der langgestreckte Zwischenförderer 34 ist an seinem rückwärtigen Ende um eine vertikale Achse 56 schwenkbar am Einzugsförderer 36 angelenkt. Eine weitere (oder alternativ verwendbare) Achse 60, um die der Zwischenförderer 34 gegenüber dem Erntevorsatz 20 schwenkbar angelenkt sein kann, befindet sich zwischen dem Erntevorsatz 20 und dem langgestreckten Einzugsförderer 34. Eine Lenksteuereinrichtung 62 der Erntemaschine 10 ist einerseits mit Aktoren zur Lenkung der rückwärtigen Räder 16 und andererseits mit dem Aktor 54 zur Lenkung der Erntevorsatzbodeneingriffsmittel 52 verbunden. Wie anhand der in Figur 2 gezeigten Situation beim Wenden der Erntemaschine 10 im Vorgewende erkennbar ist, steuert die Lenksteuereinrichtung 62 die rückwärtigen Räder 16 und die Erntevorsatzbodeneingriffsmittel 52 üblicherweise gegensinnig an, sodass sich der Erntevorsatz 20 und die Erntemaschine 10 auf einer gemeinsamen Bahn bewegen und das Ackermann-Gesetz erfüllt wird. Die Winkel des Entladeförderers 40 und des Auslasskanals 46 können, wie in der Figur 3 gezeigt, selbsttätig mit dem Winkel des Zwischenförderers 34 um die Achse 56 synchronisiert werden, um den Fahrern der Transportfahrzeuge 44, 50 die Arbeit zu erleichtern.

Der Einzugsförderer 36 ist in konventioneller Weise schwenkbar am Fahrgestell 12 der Erntemaschine 10 angelenkt, und zwar an seinem rückwärtigen Ende um eine sich quer zur Vorwärtsrichtung V und horizontal erstreckende Achse. Der Zwischenförderer 74 ist starr (nicht schwenkbar) am Einzugsförderer 36 befestigt. Da der Erntevorsatz 20 durch die Erntevorsatzbodeneingriffsmittel 52 auf dem Erdboden abgestützt ist, kann ein zum Verschwenken des Einzugsförderers 36 um besagte Achse vorgesehener Aktor in einem Schwimmmodus betrieben werden, in dem der Einzugsförderer um die Achse frei verschwenkt werden kann, oder dieser Aktor kann ganz entfallen. Es wäre auch denkbar, den langgestreckten Zwischenförderer 34 insbesondere im Bereich seiner Mitte mit einem Knickgelenk 72 mit einer horizontalen, sich quer zur Vorwärtsrichtung erstreckenden Schwenkachse zu versehen, dem ein Verstellaktor 74 zugeordnet sein kann. Alternativ oder zusätzlich erfolgt die Verstellung des Knickgelenks 72 erfolgt durch den Aktor zur Verstellung des Einzugsförderers 36 um die horizontale, quer zur Vorwärtsrichtung V verlaufende Achse. Durch das Knickgelenk 72 kann ein Aufsetzen des Zwischenförderers 34 in Bodenwellen (insbesondere Kuppen) vermieden und/oder der Anstellwinkel der Segmente 22 bis 26 angepasst werden. Bei einer anderen Ausführungsform ist der Zwischenförderer 34 am Einzugsförderer 36 um eine horizontale und quer zur Vorwärtsrichtung V verlaufende Achse schwenkbar angebracht. Dann kann das Knickgelenk 72 nur durch den Aktor 74 verstellt werden, oder das Knickgelenk 72 entfällt und die Verstellung des Anstellwinkels der Segmente 22 bis 26 erfolgt durch den Aktor zur Verstellung des Einzugsförderers 36.

Weitere Erntevorsatzbodeneingriffsmittel 76 in Form von Rädern sind an den äußeren Enden der äußeren Segmente 22 und 24 angebracht. Die weiteren Erntevorsatzbodeneingriffsmittel 76 sind ebenfalls durch mit der Lenksteuereinrichtung 62 verbundene Aktoren 54 lenkbar und vorzugsweise auch antreibbar. Die weiteren Erntevorsatzbodeneingriffsmittel 76 erleichtern es, den Erntevorsatz 20 parallel zu einem Seitenhang zu führen. Außerdem erleichtern sie die Lenkung des Erntevorsatzes 20 bei der Ausführungsform mit den beiden vertikalen Achsen 56 und 60.

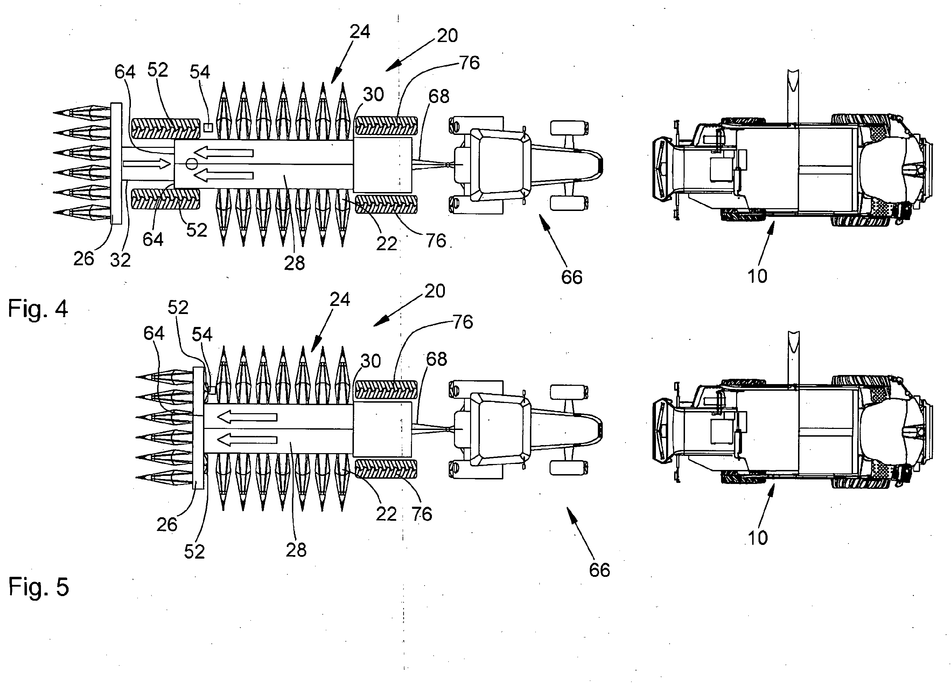

Der Lenksteuereinrichtung 62 sind außerdem Signale hinsichtlich einer Seitenhangneigung zuführbar, die von einem geeigneten Sensor oder anhand einer abgespeicherten, dreidimensionalen Karte und einer Positionsbestimmungseinrichtung bereitgestellt werden können. Die Lenksteuereinrichtung kann somit den Aktor des Erntevorsatzes abhängig von der Seitenhangneigung ansteuern, wie anhand der Figur 3 illustriert wird, die den Betrieb der Erntemaschine 10 und der Transportfahrzeuge 44, 50 mit den Anhängern 42, 48 am Seitenhang zeigt. Die Erntemaschine 10 und die Erntevorsatzbodeneingriffsmittel 52 werden dann hangaufwärts gelenkt, um den hangabwärtigen Schlupf auszugleichen und die Erntemaschine 10 und den Erntevorsatz 20 auf einer gewünschten Bahn zu bewegen. Die Figuren 4 und 5 stellen dar, in welcher Weise der Erntevorsatz zum Transport auf einer Straße in eine Transportstellung verbracht werden kann. Nach dem Trennen des Zwischenförderers 34 vom Einzugsförderer 36 und dem Abziehen der Erntemaschine 10 werden das linke und rechte Segment 22, 24 mit ihren Förderern 28, 30 um vertikale Achsen 64 (gegenüber der in der Figur 1 gezeigten Arbeitsstellung) manuell oder durch geeignete Aktoren entgegen der Vorwärtsrichtung V nach hinten verschwenkt, bis ihre Förderer 28, 30 aneinander anliegen und die Segmente 22 in Vorwärtsrichtung V orientiert sind. Dann ist die in Figur 4 dargestellte Stellung erreicht. Anschließend wird das mittlere Segment 26 mit dem Förderer 32 manuell oder durch geeignete Aktoren gegenüber einem die Erntevorsatzbodeneingriffsmittel 52 halternden Rahmen, an dem auch Segmente 22, 24 an den Achsen 64 angelenkt sind, nach hinten gezogen und oberhalb der Erntevorsatzbodeneingriffsmittel 52 positioniert, sodass die in der Figur 5 gezeigte Situation entsteht. Der Erntevorsatz 20 kann dann durch eine am Zwischenförderer 34 angebrachte Kupplung 68 hinter der Erntemaschine 10 oder einem separaten Traktor 66 hergezogen werden. Die Erntevorsatzbodeneingriffsmittel 52 werden dabei durch den Aktor 54 in eine Geradeausfahrtstellung verbracht. Der langgestreckte Zwischenförderer 34 könnte, anders als gezeigt, auch kürzer als das linke und rechte Segment 22, 24 ausgeführt werden und bei der Straßenfahrt (Figur 5) durch eine ausziehbare Deichsel verlängert werden, um die Kupplung 68 rückwärtig der Segmente 22, 24 anbringen zu können, oder die Kupplung 68 wird rückwärtig (in der Situation nach Figur 1 außen) an einem oder beiden der Segmente 22, 24 angebracht. Auch könnte das mittlere Segment 26 um eine horizontale und quer zur Vorwärtsrichtung V verlaufende Achse (nicht gezeigt) nach oben über die Erntevorsatzbodeneingriffsmittel 52 verschwenkt werden, anstelle sie wie in Figur 5 zu verschieben, oder sie könnten bei der Straßenfahrt in der Stellung nach Figur 4 verbleiben.

Ein Vorteil des langgestreckten Zwischenförderers 34 liegt darin, dass beide Transportfahrzeuge 44, 50 innerhalb der seitlichen Begrenzungen des Erntevorsatzes 20 hinter dem Erntevorsatz 20 fahren können. Außerdem ermöglicht es die relativ lange Förderstrecke des Zwischenförderers 34, die Rate des der Erntegutbearbeitungseinrichtung 35 zugeführten Ernteguts zu vergleichsmäßigen, indem die Fördergeschwindigkeit des Zwischenförderers selbsttätig verändert wird und anhand eines oder mehrerer Sensoren 70 angesteuert wird, die zur vorausschauenden Erfassung der Menge des aufgenommenen Ernteguts dienen. Der Sensor 70 kann beispielsweise die Antriebsleistung der Förderer 28 bis 32 anhand der aufgenommenen elektrischen Ströme oder des Hydraulikdruckabfalls am zum Antrieb dienenden Hydromotor messen oder die vor dem Erntevorsatz 20 stehende Erntegutmenge mittels einer Kamera oder eines Laser-Scanners optisch erfassen. Weiterhin bietet der langgestreckte Zwischenförderer 34 die Möglichkeit, eventuell aufgenommene Fremdkörper durch einen Detektor zu erfassen, der beispielsweise mit Röntgenstrahlung oder Mikrowellen arbeiten kann und die Erntemaschine einschließlich des Zwischenförderers 34 sanft und rechtzeitig anzuhalten, damit der Fremdkörper durch den Bediener oder selbsttätig durch geeignete Mittel entfernt werden kann.

## Patentansprüche

1. Selbstfahrende landwirtschaftliche Erntemaschine (10) mit einem Fahrgestell (12), das sich auf im Bodeneingriff befindlichen Mitteln (14, 16) abstützt, mit denen die Erntemaschine (10) in einer normalen Vorwärtsfahrtrichtung (V) über ein Feld bewegbar ist, einer Lenksteuereinrichtung (62), mit denen die im Bodeneingriff befindlichen Mittel (14, 16) lenkbar sind, einer innerhalb des Fahrgestells (12) angeordneten Erntegutbearbeitungseinrichtung (35) und einem an der Vorderseite des Fahrgestells (12) angeordneten Einzugsförderer (36), dem ein gegenüber dem Fahrgestell (12) um eine vertikale Achse (56) schwenkbar gelagerter Erntevorsatz (20) zur Aufnahme von Erntegut vorgeordnet ist, welches im Erntebetrieb durch den Einzugsförderer (36) der Erntegutbearbeitungseinrichtung (35) zuführbar ist, **dadurch gekennzeichnet, dass** sich der Erntevorsatz (20) durch antreibbare und mittels eines fremdkraftbetätigten, mit der Lenksteuereinrichtung (62) gekoppelten Aktors (54) lenkbare Erntevorsatzbodeneingriffsmittel (52, 76) auf dem Boden abstützt.

2. Erntemaschine (10) nach Anspruch 1, **dadurch gekennzeichnet, dass** zwischen dem Erntevorsatz (20) und dem Einzugsförderer (36) ein langgestreckter Zwischenförderer (34) angeordnet ist.

3. Erntemaschine (10) nach Anspruch 2, **dadurch gekennzeichnet, dass** der Erntevorsatz (20) drei Segmente (22, 24, 26) mit Mitteln zur Aufnahme des Ernteguts umfasst, an deren Rückseite Förderer (28, 30, 32) angeordnet sind, die das aufgenommene Erntegut im Erntebetrieb dem Zwischenförderer (34) übergeben.

4. Erntemaschine (10) nach Anspruch 3, **dadurch gekennzeichnet, dass** die Segmente (22, 24, 26) des Erntevorsatzes (10) in eine eingefaltete Transportstellung verbringbar sind, in welcher äußere Segmente (22, 24) aus ihrer Arbeitsstellung entgegen der Vorwärtsrichtung um die Hochachsen (64) nach hinten verschwenkt sind und sich über dem Zwischenförderer (34) befinden.

5. Erntemaschine (10) nach Anspruch 4, **dadurch gekennzeichnet, dass** ein mittleres Segment (26) des Erntevorsatzes (20) zusätzlich entgegen der Vorwärtsrichtung (v) gegenüber den Erntevorsatzbodeneingriffsmitteln (52) in eine Transportstellung verschiebbar ist.

6. Erntemaschine (10) nach einem der Ansprüche 2 bis 5, **dadurch gekennzeichnet, dass** die Fördergeschwindigkeit des Zwischenförderers (34) veränderbar und anhand eines Sensors (70) zur vorausschauenden Erfassung der Menge des aufgenommenen Ernteguts im Sinne einer Vergleichmäßigung der Rate des der Erntegutbearbeitungseinrichtung (35) zugeführten Ernteguts ansteuerbar ist.

7. Erntemaschine (10) nach einem der Ansprüche 2 bis 6, **dadurch gekennzeichnet, dass** sich die vertikale Achse (56), um die der Erntevorsatz (20) gegenüber dem Fahrgestell (12) schwenkbar ist, zwischen dem Zwischenförderer (34) und dem Einzugsförderer (36) und/oder zwischen dem Erntevorsatz (20) und dem Zwischenförderer (34) befindet.

8. Erntemaschine (10) nach einem der Ansprüche 1 bis 7, **dadurch gekennzeichnet, dass** der Lenksteuereinrichtung (62) Signale hinsichtlich einer Seitenhangneigung zuführbar sind, und dass die Lenksteuereinrichtung (62) betreibbar ist, den Aktor (54) des Erntevorsatzes (20) abhängig von der Seitenhangneigung anzusteuern.

9. Erntemaschine (10) nach einem der Ansprüche 3 bis 8, **dadurch gekennzeichnet, dass** die Erntevorsatzbodeneingriffsmittel (52, 76) am mittleren Segment (26) und/oder den äußeren Segmenten (22, 24) befestigt sind.

10. Erntemaschine (10) nach einem der Ansprüche 2 bis 9, **dadurch gekennzeichnet, dass** der langgestreckte Zwischenförderer (34) mit einem näherungsweise mittigen Knickgelenk (72) ausgestattet ist.

## Claims

1. Self-propelled agricultural harvesting machine (10) having a chassis (12), which is supported on means (14, 16) which are in contact with the ground and by means of which the harvesting machine (10) is movable over a field in a normal forward direction of travel (V), a steering control device (62) by way of which the means (14, 16) which are in contact with the ground are steerable, a harvested crop processing device (35) which is arranged within the chassis (12) and an input conveyer (36) which is arranged on the front end of the chassis (12), a crop attachment (20), which is mounted so as to be pivotable about a vertical axis (56) in relation to the chassis (12) for the reception of harvested crop, being arranged upstream of said input conveyor, said harvested crop being suppliable in the harvesting operation by the input conveyor (36) to the harvested crop processing device (35), **characterized in that** the crop attachment (20) is supported on the ground by drivable crop attachment ground contacting means (52, 76) which are steerable by means of a power-operated actuator (54) which is coupled to the steering control device (62).

2. Harvesting machine (10) according to Claim 1, **characterized in that** an elongated intermediate conveyor (34) is arranged between the crop attachment (20) and the input conveyor (36).

3. Harvesting machine (10) according to Claim 2, **characterized in that** the crop attachment (20) includes three segments (22, 24, 26) with means for the reception of the harvested crop, on the rear side of which are arranged conveyors (28, 30, 32) which transfer the received harvested crop in the harvesting operation to the intermediate conveyor (34).

4. Harvesting machine (10) according to Claim 3, **characterized in that** the segments (22, 24, 26) of the crop attachment (20) can be moved into a folded-in transport position, in which outer segments (22, 24) are pivoted to the rear about the vertical axes (64) out of their operating position in opposition to the forward direction and are situated above the intermediate conveyor (34).

5. Harvesting machine (10) according to Claim 4, **characterized in that** a central segment (26) of the crop attachment (20) is additionally displaceable into a transport position in relation to the crop attachment ground contacting means (52) in opposition to the forward direction (v).

6. Harvesting machine (10) according to one of Claims 2 to 5, **characterized in that** the conveying speed of the intermediate conveyor (34) is modifiable and is controllable by way of a sensor (70) for the proactive detection of the quantity of the received harvested crop in terms of homogenizing the rate of the harvested crop supplied to the harvested crop processing device (35).

7. Harvesting machine (10) according to one of Claims 2 to 6, **characterized in that** the vertical axis (56), about which the crop attachment (20) is pivotable in relation to the chassis (12), is situated between the intermediate conveyor (34) and the input conveyor (36) and/or between the crop attachment (20) and the intermediate conveyor (34).

8. Harvesting machine (10) according to one of Claims 1 to 7, **characterized in that** signals are suppliable to the steering control device (62) with regard to a slope gradient, and **in that** the steering control device (62) can be operated to drive the actuator (54) of the crop attachment (20) in dependence on the lateral slope.

9. Harvesting machine (10) according to one of Claims 3 to 8, **characterized in that** the crop attachment ground contacting means (52, 76) are fastened on the central segment (26) and/or the outer segments (22, 24).

10. Harvesting machine (10) according to one of Claims 2 to 9, **characterized in that** the elongated intermediate conveyor (34) is provided with an approximately central articulated joint (72).

## Revendications

1. Moissonneuse agricole automobile (10) comprenant un châssis (12) qui s'appuie sur des moyens (14, 16) se trouvant en contact avec le sol, au moyen desquels la moissonneuse (10) peut être déplacée sur un champ dans un sens de conduite vers l'avant normal (V), un dispositif de commande de direction (62), au moyen duquel les moyens (14, 16) se trouvant en contact avec le sol peuvent être dirigés, un dispositif de traitement de produits de récolte (35) disposé à l'intérieur du châssis (12) et un transporteur d'alimentation (36) disposé sur le côté avant du châssis (12), en amont duquel transporteur d'alimentation est placé un accessoire de récolte (20) monté de manière à pouvoir pivoter autour d'un axe vertical (56) par rapport au châssis (12) pour recevoir des produits de récolte, lesquels peuvent être acheminés dans le mode de récolte, au moyen du transporteur d'alimentation (36), jusqu'au dispositif de traitement de produits de récolte (35), **caractérisée en ce que** l'accessoire de récolte (20) s'appuie sur le sol grâce à des moyens de contact avec le sol de l'accessoire de récolte (52, 76) pouvant être entraînés et pouvant être dirigés au moyen d'un actionneur (54) actionné par une force extérieure et accouplé au dispositif de commande de direction (62).

2. Moissonneuse (10) selon la revendication 1, **caractérisée en ce qu'**un transporteur intermédiaire allongé (34) est disposé entre l'accessoire de récolte (20) et le transporteur d'alimentation (36).

3. Moissonneuse (10) selon la revendication 2, **caractérisée en ce que** l'accessoire de récolte (20) comporte trois segments (22, 24, 26) pourvus de moyens pour recevoir les produits de récolte, sur le côté arrière desquels sont disposés des transporteurs (28, 30, 32) qui, dans le mode de récolte, remettent les produits de récolte reçus au transporteur intermédiaire (34).

4. Moissonneuse (10) selon la revendication 3, **caractérisée en ce que** les segments (22, 24, 26) de l'accessoire de récolte (20) peuvent être amenés à une position de transport repliée, dans laquelle les segments extérieurs (22, 24) sont pivotés vers l'arrière autour des axes verticaux (64) à partir de leur position de travail en sens inverse au sens vers l'avant et se trouvent au-dessus du transporteur intermédiaire (34).

5. Moissonneuse (10) selon la revendication 4, **caractérisée en ce qu'**un segment médian (26) de l'accessoire de récolte (20) peut en outre être déplacé en sens inverse au sens vers l'avant (V) par rapport aux moyens de contact avec le sol de l'accessoire de récolte (52) jusqu'à une position de transport.

6. Moissonneuse (10) selon l'une quelconque des revendications 2 à 5, **caractérisée en ce que** la vitesse de transport du transporteur intermédiaire (34) peut être modifiée et peut être commandée à l'aide d'un capteur (70) pour la détection prévisionnelle de la quantité des produits de récolte reçus au sens d'une homogénéisation du taux des produits de récolte acheminés jusqu'au dispositif de traitement de produits de récolte (35).

7. Moissonneuse (10) selon l'une quelconque des revendications 2 à 6, **caractérisée en ce que** l'axe vertical (56), autour duquel l'accessoire de récolte (20) peut être pivoté par rapport au châssis (12), se trouve entre le transporteur intermédiaire (34) et le transporteur d'alimentation (36) et/ou entre l'accessoire de récolte (20) et le transporteur intermédiaire (34).

8. Moissonneuse (10) selon l'une quelconque des revendications 1 à 7, **caractérisée en ce que** des signaux concernant une inclinaison de pente latérale peuvent être acheminés au dispositif de commande de direction (62), et **en ce que** le dispositif de commande de direction (62) peut fonctionner pour commander l'actionneur (54) de l'accessoire de récolte (20) en fonction de l'inclinaison de pente latérale.

9. Moissonneuse (10) selon l'une quelconque des revendications 3 à 8, **caractérisée en ce que** les moyens de contact avec le sol de l'accessoire de récolte (52, 76) sont fixés au segment médian (26) et/ou aux segments extérieurs (22, 24).

10. Moissonneuse (10) selon l'une quelconque des revendications 2 à 9, **caractérisée en ce que** le transporteur intermédiaire allongé (34) est équipé d'une articulation pivotante (72) approximativement médiane.
